# EUROPÄISCHE PATENTSCHRIFT

(11) **EP 2 014 893 B1**
(45) Veröffentlichungstag und Bekanntmachung des Hinweises auf die Patenterteilung: **16.03.2016**
(21) Anmeldenummer: 08005081.8
(22) Anmeldetag: 19.03.2008
(51) Int. Cl.: F02B 29/04

(54) **Umluftsystem für einen Abgasturbolader**
Ventilation system for an exhaust gas turbo charger
Système de circulation d'air pour une turbosoufflante de gaz d'échappement

(30) Priorität: 09.05.2007 DE 102007021702
(43) Veröffentlichungstag der Anmeldung: 14.01.2009
(73) Patentinhaber: Dr. Ing. h.c. F. Porsche AG, 70435 Stuttgart (DE)
(72) Erfinder: Schneider, Klaus, 75233 Tiefenbronn (DE)

(56) Entgegenhaltungen:
- EP-A- 1 882 836
- WO-A-2005/017329
- DE-A1-102004 050 778
- DE-C1- 3 434 173
- US-A1- 2006 016 187

## Beschreibung

Die Erfindung betrifft ein Umluftsystem für einen Abgasturbolader mit den Merkmalen des Oberbegriffs des Anspruchs 1 und ein Verfahren zur Umleitung von Luft von der Druckseite zur Saugseite eines Verdichters eines Abgasturboladers mit den Merkmalen des Oberbegriffs des Anspruchs 11.

Bei Benzinmotoren mit Turboaufladung ist es aus verschiedenen Gründen üblich ein Umluftsystem im Aufladekreislauf vorzusehen.

Die Druckschrift US 2006/0016187 beschreibt eine Brennkraftmaschine mit einem Abgasturbolader, bei der die verdichtete Luft mittels eines Ladeluftkühlers gekühlt werden soll. Ein Teil der verdichteten Luftmasse wird in die Ansaugleitung zurückgeführt, falls die Umgebungstemperatur zu einer Vereisung des Luftfilters führen würde. Hierfür ist ein Ventil zwischen dem Ladeluftkühler und der Ansaugleitung vorgesehen. Die Zurückführung der verdichteten Luft in die Ansaugleitung ermöglicht, die Luft in der Ansaugleitung bei einer vorherbestimmten Temperatur zu halten.

Aus der US 2006/0016187 ist eine aufgeladene Brennkraftmaschine bekannt, bei der ein Ladeluftkühler vorgesehen ist und mit einer Saugseite eines Verdichters über ein Bypassleitung verbunden ist. Dabei ist die Bypassleitung mit einem Ausgangsbereich des Ladeluftkühlers verbunden. In der WO 2005/017329 A1 ist eine aufgeladene Brennkraftmaschine gezeigt, bei der zwischen einem Ladeluftkühler und dem Verdichter eine Verbindungsleitung angeordnet ist, von der eine Bypassleitung abgezweigt ist. Darüber hinaus ist in der DE 34 34 173 C1 eine Vorrichtung zur Kühlung der Verbrennungsluft einer aufgeladenen Brennkraftmaschine beschrieben, bei der zwischen einem Ladeluftkühler und einer Druckseite eines Verdichters eine Bypassleitung angeordnet ist. Außerdem ist in der DE 10 2004 050 778 A1 eine aufgeladene Brennkraftmaschine beschrieben, bei der eine Bypassleitung zwischen einem Ladeluftkühler und einer Saugseite eines Verdichters positioniert ist, die mit einem Ausgangsbereich des Ladeluftkühlers verbunden ist.

Benzinmotoren im Gegensatz zu Dieselmotoren weisen eine Drosselklappe auf, die die Luft/Gas-Strömung ändert. Diese Drosselklappe schließt beispielsweise beim Gangwechsel, da üblicherweise das Gaspedal entlastet wird. Dabei wird die in die Ansaugstrecke strömende Luft abrupt abgebremst; es kommt zu einem Geschwindigkeitsabbau und einem Rückstau. Ferner führt das Schließen der Drosselklappe bei laufendem Verdichter zu einem hohen Druck vor der Drosselklappe, die dadurch erhöhten Belastungen ausgesetzt ist und beschädigt werden kann. Dies gilt insbesondere für sogenannte E-Gas-Systeme. Das Schließen der Drosselklappe erzeugt außerdem eine Reflexionswelle in der Luftsäule zwischen Verdichter und Drosselklappe. Diese Reflexionswelle kann sogenanntes Verdichterpumpen auslösen, das Schwingungen erzeugt, die zu einer Beschädigung der Beschaufelung das Verdichterbades führen kann.

Diese Nachteile werden heute dadurch abgemildert, dass mittels eines angesteuerten Ventils ein Bypass zwischen Saug- und Druckseite des Verdichters geöffnet wird, also eine Verbindung zwischen Saugseite vor Verdichter und Druckseite nach Verdichter geschaffen wird. Die Luft strömt im Kreis und der Druckstau wird so abgebaut. Zusätzlich bewirkt der geöffnete Bypass in einem Teillastbetrieb des Motors ein rascheres Ansprechen des Turboladers beim Öffnen der Drosselklappe. Die Umluft führt somit zu einer harmonischer und direkter ansprechenden Gasannahme des Motors.

Üblicherweise sind die Anschlüsse für diese Umluftsysteme in Form eines Abzweigs im Saugrohr (vor dem Verdichter) und im Druckschlauch (nach dem Verdichter) als Zwischenstück mit Abzweig eingebaut. Das Anbringen eines Abzweigs in einem Druckschlauch ist aber technisch wie qualitativ nicht leicht beherrschbar. Wegen der unter hohem Druck strömenden Luft im Druckschlauch ist es problematisch, eine strömungstechnische Abzweigung im Druckschlauch zu schaffen. Die Abzweigung ist zur vereinfachten Herstellung rechtwinklig zum Druckschlauch angebracht, was nicht strömungsoptimal ist. Außerdem verteuert die Einfügung eines Abzweigs das System.

Der vorliegenden Erfindung liegt die Aufgabe zugrunde, ein verbessertes Umluftsystem für einen Abgasturbolader bereitzustellen, das die genannten Probleme vermeidet.

Erfindungsgemäß wird dieses Problem durch ein Umluftsystem mit den Merkmalen des Anspruchs 1 und ein Verfahren gemäß Anspruch 9 gelöst. Vorteilhafte Weiterbildungen des erfindungsgemäßen Umluftsystems ergeben sich aus den abhängigen Ansprüchen.

Das erfindungsgemäße Umluftsystem sieht vor, den Abzweig der Umluft nicht im Druckschlauch, sondern mittels eines im Ladeluftkühlerkasten angebrachten Stutzens darzustellen. Der Rücklauf erfolgt dann insbesondere konventionell über das Ventil und einen Stutzen an der Saugseite eines Abgasturboladers. Indem der Bypass zwischen dem Ladeluftkühlerkasten und dem Saugrohr angebracht wird, wird die Herstellung eines strömungsgünstigen Bypasses erleichtert. Die Erfindung ermöglicht es außerdem, auf die sonst erforderliche Abzweigung im Druckschlauch zwischen dem Ladeluftkühlerkasten und dem Saugrohr zu verzichten, was wiederum zu einer Erleichterung der Herstellung und einer Vereinfachung der Montage des Umluftsystems z.B. in einem Fahrzeug führt.

In vorteilhafter Ausgestaltung der Erfindung ist der Stutzen zusammen mit dem Ladeluftkühlerkasten integral ausgebildet, d.h. Stutzen und Ladeluftkühlerkasten sind aus einem Stück hergestellt. Hierbei wird der Einbau des Umluftsystems vereinfachet.

In einer weiteren vorteilhaften Ausgestaltung der Erfindung sind der Stutzen und der Ladeluftkühlerkasten aus Kunststoff gefertigt, was die Herstellung des Umluftsystems vereinfacht.

Weitere Vorteile und Ausgestaltungen der Erfindung ergeben sich aus der nachfolgenden Beschreibung und den beiliegenden Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand mehrerer Ausführungsbeispiele in den Zeichnungen schematisch dargestellt und wird im Folgenden unter Bezugnahme auf die Zeichnungen ausführlich beschrieben.
- Figur 1: zeigt in schematischer Darstellung ein erfindungsgemäßes Umluftsystem,
- Figur 2: zeigt in schematischer Darstellung ein Umluftsystem gemäß dem Stand der Technik,
- Figur 3: zeigt eine Seitenansicht eines Teils des erfindungsgemäßen Umluftsystems,
- Figur 4: zeigt einen Schnitt durch einen Teil des erfindungsgemäßen Umluftsystems.

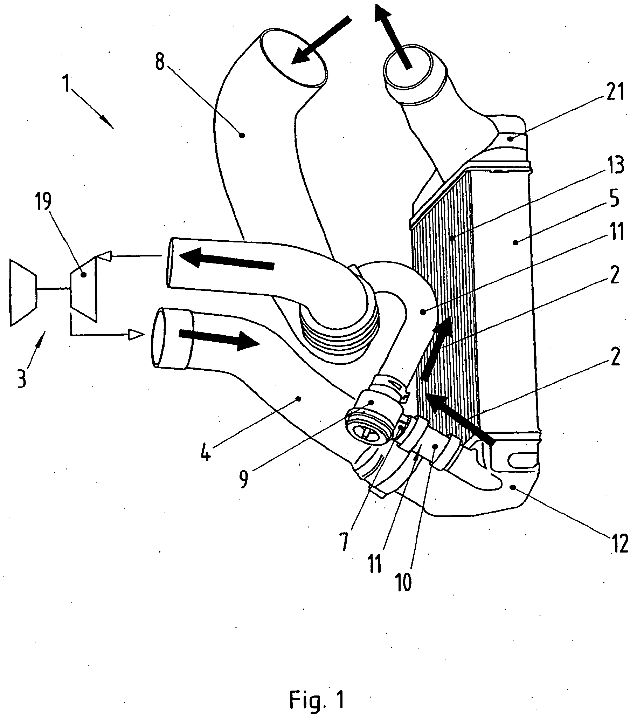

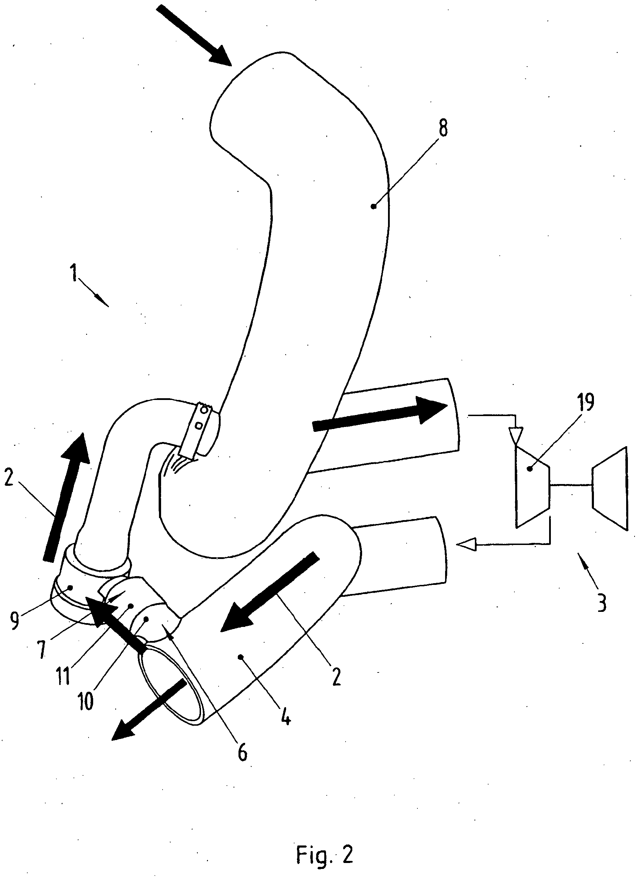

In Figur 2 ist ein Umluftsystem 1 in einem Aufladekreislauf eines Motors mit Turboaufladung gemäß dem Stand der Technik dargestellt. Die Strömungsrichtung 2 der Luft im Umluftsystem 1 wird mit Pfeilen gezeigt. Bei diesem System wird Luft in einem Verdichter 19 eines Abgasturboladers 3 verdichtet und durch einen Druckschlauch 4 zu einem Kühler 5 (vgl. z.B. Fig. 1) geleitet. Im Falle von z.B. einem Gangwechsel, wird eine druckseitig angeordnete Drosselklappe (nicht gezeigt) geschlossen, was zu einer Abbremsung und einem Rückstau der strömenden Luft führt. Das Schließen der Drosselklappe erhöht außerdem den Druck vor der Drosselklappe, wodurch deren Belastung entsprechend ansteigt. Ferner bildet sich eine Reflexionswelle aus, die an einem Verdichterrad (nicht gezeigt) ein Verdichterpumpen auslösen kann. Die damit einhergehenden Schwingungen können das Verdichterrad bzw. dessen Beschaufelung beschädigen.

Deshalb wird eine Abzweigung 6 im Druckschlauch 4 angebracht, so dass eine Umleitung oder Bypass 7 um den Abgasturbolader 3 herum, zwischen dem Druckschlauch 4 und dem Saugrohr 8, angebracht werden kann, wobei Luft aus den Druckschlauch 4 entnommen und in das Saugrohr 8 geleitet wird. So strömt die Luft im Kreis und eine Abbremsung des Abgasturboladers 3 wird vermieden. So kann der Turbolader 3 im Teillastbetrieb des damit ausgestatteten Motors schneller ansprechen, wenn durch eine entsprechende Gaspedalbetätigung mehr Leistung angefordert wird. Der Bypass 7 weist ein angesteuertes Ventil 9 auf.

Wie aus der Figur 2 ersichtlich ist, benötigt der Druckschlauch 4 einen Stutzen 10 für eine Bypassleitung 11. Dieser Stutzen 10 erschwert die Herstellung und die Montage des Druckschlauchs 4 z.B. in einem Kraftfahrzeug. Der Stutzen 10 ist weiterhin zur vereinfachten Herstellung rechtwinklig zum Druckschlauch 4 angebracht, was nicht strömungsgünstig ist.

Figur 1 zeigt nun eine Ausführungsform des erfindungsgemäßen Umluftsystems 1 zusammen mit einem, an den Druckschlauch 4 angeschlossenen Kühler 5. Das Umluftsystem 1 umfasst eine Bypassleitung 11 mit einem angesteuerten Ventil 9. Der Abzweig der Umluft an der Druckseite des Verdichters 19 des Abgasturboladers 3 ist mittels eines in einem Ladeluftkühlerkasten 12 angebrachten Stutzens 10 realisiert. Der Ladeluftkühlerkasten 12 sammelt und verteilt die Luft durch Kühlrohre 13 im Kühler 5, wobei die Luft in einen zweiten Ladeluftkühlerkasten 21 geleitet wird, wonach die Luft durch eine Drosselklappe (nicht gezeigt) zu einem Motor geleitet wird. Die Bypassleitung 11, z.B. ein Rohr oder ein Schlauch, leitet die Luft aus dem Ladeluftkühlerkasten 12 mittels des angesteuerten Ventils 9 zum Saugrohr 8, also zur Saugseite des Verdichters 19 des Abgasturboladers 3. Hierbei wird auf eine Abzweigung im Druckschlauch 4 verzichtet. Dadurch wird die Herstellung und Montage des Druckschlauchs 4 z.B. in einem Fahrzeug vereinfacht. Im Fall eines möglichen Rückstaus der Luft im Druckschlauch 4 und eines möglichen Turbolochs, wird das Ventil 9 geöffnet, so dass die Luft im Umluftsystem 1 im Kreis strömt (mit den Pfeilen dargestellt).

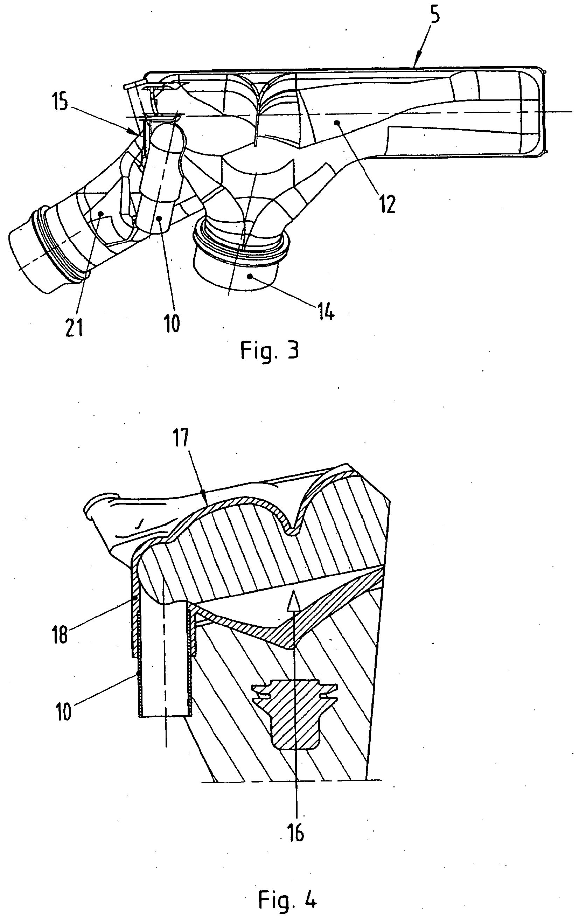

Fig. 3 zeigt eine bevorzugte Ausführungsform des Ladeluftkühlerkastens 12 des erfindungsgemäßen Umluftsystems 1. Gleiche Bauteile werden mit gleichen Bezugszeichen versehen.

Der Ladeluftkühlerkasten 12 ist an der Eintrittsseite des Kühlers 5 und weist einen Eintrittsstutzen 14 für den Druckschlauch 4 auf, durch den verdichtete Luft strömt. Neben dem Eintrittsstutzen 14 für den Druckschlauch ist ein Stutzen 10 für die Bypassleitung 11 angeordnet. Der Stutzen 10 für die Bypassleitung 11 ist einteilig mit dem Ladeluftkühlerkasten 12 ausgebildet. Dies erleichtert die Montage des Umluftsystems 1. Zu diesem Zweck ist der Ladeluftkühlerkasten 12 vorzugweise aus Kunststoff ausgeführt, um dessen Herstellung zu vereinfachen. Es versteht sich, dass andere Materialien z.B. Metall verwendet werden können.

Der Stutzen 10 für die Bypassleitung 11 im Ladeluftkühlerkasten 12 und der Stutzen 14 für den Druckschlauch 4 im Ladeluftkühlerkasten 12 sind vorzugsweise im Wesentlichen parallel zueinander angeordnet, wie aus der Fig. 3 ersichtlich ist. Diese Anordnung kann z.B. eine raumsparende Gestaltung des Umluftsystems 1 ermöglichen. Diese Anordnung vereinfacht auch die Herstellung des mit den Stutzen 10 und 14 ausgestatteten Ladeluftkühlerkastens 12, beispielsweise können die beiden Stutzen 10, 14 in einer Aufspannung bearbeitet werden. Alternativ kann der Ladeluftkühlerkasten 12 auch mit den beiden Stutzen 10, 14 einteilig, also aus einem Stück hergestellt sein. Der Stutzen 10 für die Bypassleitung 11 ist vorzugsweise an einem Ende 15 des Ladeluftkühlerkastens 12 angeordnet, was aus den folgenden Gründen strömungsgünstig ist.

Figur 4 zeigt einen Schnitt durch eine weitere Ausführungsform eines Ladeluftkühlerkastens 12 des erfindungsgemäßen Umluftsystems 1. Die Strömungsrichtung 16 der Luft im Fall eines geöffneten Ventils 9 in der Bypassleitung ist mit Pfeilen dargestellt. Hierbei ist sichtbar, dass die Rückwand 17 des Ladeluftkühlerkastens 12 im Bereich gegenüber und zwischen dem Stutzen 10 für die Bypassleitung 11 und dem Stutzen 14 für den Druckschlauch 4 im Wesentlichen bogenförmig oder gewölbt ausgebildet ist. Die Form der Rückwand 17 und die Relativstellung der zwei Stutzenteile bezüglich des Ladeluftkühlerkastens 12 ermöglichen es, eine strömungsgünstige Strömung der Luft vom Druckschlauch 4 durch den Ladeluftkühlerkasten 12 und in die Bypassleitung 11 zu schaffen bzw. eine günstige Luftverteilung auf die Netzfläche zu realisieren.

Der Stutzen 10 in Figur 4 kann in eine Fassung 18 des Ladeluftkühlerkastens 12 eingeklebt sein, wobei die Fassung 18 einteilig mit dem Ladeluftkühlerkasten 12 ausgebildet ist. Dies ermöglicht die Verwendung von Stutzen 10 in unterschiedlicher Größe, außerdem vereinfacht sich dadurch die Bearbeitung bei metallischem Ladeluftkühlerkasten 12. Es versteht sich, dass ein einteiliger Ladeluftkühlerkasten 12 und Stutzen 10 wie bei den anderen Ausführungsformen verwendet wird. Ebenso kann der Stutzen 10 in den Ladeluftkühlerkasten 12 eingeschweißt oder eingelötet sein.

Die vorangehende Beschreibung der Ausführungsbeispiele gemäß der vorliegenden Erfindung dient nur zu illustrativen Zwecken und nicht zum Zwecke der Beschränkung der Erfindung. Insbesondere im Hinblick auf einige bevorzugte Ausführungsbeispiele entnimmt ihr der Fachmann, dass verschiedene Änderungen und Modifikationen in Gestalt und Einzelheiten gemacht werden können, ohne von dem Gedanken und Umfang der Erfindung abzuweichen. Dementsprechend soll die Offenbarung der vorliegenden Erfindung nicht einschränkend sein. Stattdessen soll die Offenbarung der vorliegenden Erfindung den Umfang der Erfindung veranschaulichen, der in den nachfolgenden Ansprüchen dargelegt ist.

## Patentansprüche

1. Umluftsystem für einen Abgasturbolader (3), bei dem
ein Bypass (7) zwischen einer Saugseite und einer Druckseite eines Verdichters (19) des Abgasturboladers (3) vorgesehen ist und zwischen einem Ladeluftkühlerkasten (12) und der Saugseite des Verdlchters (19) verläuft, wobei
ein Kühler (5) zur Kühlung der Ladeluft vorgesehen ist, von dem die Ladeluft zu einem Motor geleitet wird, und wobel
Im dem Kühler (5) zugeordneten Ladeluftkühlerkasten (12) die verdichtete Luft gesammelt und in den Kühler (5) verteilt wird,
**dadurch gekennzeichnet, dass**
der Ladeluftkühlerkasten (12) mit einem Stutzen (10) versehen ist, mit dem eine Bypassleitung (11) des Bypasses (7) verbunden ist, so dass die verdichtete Luft vom Ladeluftkühlerkasten (12) entnommen und zur Saugseite des Verdichters geleitet wird, wobei der Stutzen (10) im Ladeluftkühlerkasten (12) integriert ist,

2. Umluftsystem nach Anspruch 1, **dadurch gekennzeichnet, dass** der Ladeluftkühlerkasten (12) und der Stutzen (10) aus Kunststoff gefertigt sind.

3. Umluftsystem nach Anspruch 1 oder 2, **dadurch gekennzeichnet, dass** ein Druckschlauch (4) zwischen dem Verdichter (19) und dem Ladeluftkühlerkasten verläuft.

4. Umluftsystem nach Anspruch 3, **dadurch gekennzeichnet, dass** der Druckschlauch (4) abzweigungsfrei ausgestaltet ist.

5. Umluftsystem nach Anspruch 1, **dadurch gekennzeichnet, dass** der Stutzen (10) in den Ladeluftkühlerkasten (12) eingeklebt oder eingeschweißt oder eingelötet ist.

6. Umluftsystem nach Anspruch 3 oder 4, **dadurch gekennzeichnet, dass** der Stutzen (10) für die Bypassleitung (11) im Ladeluftkühlerkasten (12) und ein Stutzen (14) für den Druckschlauch (4) im Ladeluftkühlerkasten (12) Im Wesentlichen parallel zueinander angeordnet sind.

7. Umluftsystem nach Anspruch 3 oder 4, **dadurch gekennzeichnet, dass** eine Rückwand (17) des Ladeluftkühlerkastens (12) im Bereich gegenüber und zwischen dem Stutzen (10) für die Bypassleitung (11) und einem Stutzen (14) für den Druckschlauch (4) im Wesentlichen bogenförmig oder gewölbt ausgebildet ist.

8. Umluftsystem nach einem der vorhergehenden Ansprüche, **dadurch gekennzeichnet, dass** der Bypass (7) mit einem Ventil (9) versehen ist.

9. Verfahren zur Umleitung von Luft mittels eines Umluftsystems nach einem der vorhergehenden Ansprüche 1-8"

## Claims

1. Air recirculation system for an exhaust-gas turbocharger (3), in which
a bypass (7) is provided between a suction side and a pressure side of a compressor (19) of the exhaust-gas turbocharger (3) and runs between a charge-air cooler tank (12) and the suction side of the compressor (19), wherein
a cooler (5) is provided for cooling the charge air, from which cooler the charge air is conducted to an engine, and wherein,
in the charge-air cooler tank (12) which is assigned to the cooler (5), the compressed air is collected and distributed into the cooler (5), **characterized in that**
the charge-air cooler tank (12) is equipped with a connector (10) to which a bypass line (11) of the bypass (7) is connected such that the compressed air is extracted from the charge-air cooler tank (12) and conducted to the suction side of the compressor,
wherein the connector (10) is integrated in the charge-air cooler tank (12).

2. Air recirculation system according to Claim 1, **characterized in that** the charge-air cooler tank (12) and the connector (10) are manufactured from plastic.

3. Air recirculation system according to Claim 1 or 2, **characterized in that** a pressure hose (4) runs between the compressor (19) and the charge-air cooler tank.

4. Air recirculation system according to Claim 3, **characterized in that** the pressure hose (4) is configured without a branch.

5. Air recirculation system according to Claim 1, **characterized in that** the connector (10) is adhesively bonded or welded or brazed into the charge-air cooler tank (12).

6. Air recirculation system according to Claim 3 or 4, **characterized in that** the connector (10) for the bypass line (11) in the charge-air cooler tank (12) and a connector (14) for the pressure hose (4) in the charge-air cooler tank (12) are arranged substantially parallel to one another.

7. Air recirculation system according to Claim 3 or 4, **characterized in that** a rear wall (17) of the charge-air cooler tank (12) in the region opposite and between the connector (10) for the bypass line (11) and a connector (14) for the pressure hose (4) is of substantially curved or arched form.

8. Air recirculation system according to one of the preceding claims, **characterized in that** the bypass (7) is equipped with a valve (9).

9. Method for diverting air according to one of the preceding Claims 1-8.

## Revendications

1. Système de circulation d'air pour une turbosoufflante de gaz d'échappement (3), dans lequel
une dérivation (7) est prévue entre un côté aspiration et un côté pression d'un compresseur (19) de la turbosoufflante de gaz d'échappement (3) et s'étend entre un caisson de refroidisseur d'air de suralimentation (12) et le côté aspiration du compresseur (19),
un refroidisseur (5) étant prévu pour le refroidissement de l'air de suralimentation, à partir duquel refroidisseur l'air de suralimentation est guidé jusqu'à un moteur, et l'air comprimé étant collecté dans le caisson de refroidisseur d'air de suralimentation (12) associé au refroidisseur (5) et étant réparti dans le refroidisseur (5),
**caractérisé en ce que**
le caisson de refroidisseur d'air de suralimentation (12) est pourvu d'une tubulure (10) à laquelle une conduite de dérivation (11) de la dérivation (7) est reliée, de telle sorte que l'air comprimé soit prélevé du caisson de refroidisseur d'air de suralimentation (12) et soit guidé jusqu'au côté aspiration du compresseur, la tubulure (10) étant intégrée dans le caisson de refroidisseur d'air de suralimentation (12).

2. Système de circulation d'air selon la revendication 1, **caractérisé en ce que** le caisson de refroidisseur d'air de suralimentation (12) et la tubulure (10) sont fabriqués en plastique.

3. Système de circulation d'air selon la revendication 1 ou 2, **caractérisé en ce qu'**un tuyau sous pression (4) s'étend entre le compresseur (19) et le caisson de refroidisseur d'air de suralimentation.

4. Système de circulation d'air selon la revendication 3, **caractérisé en ce que** le tuyau sous pression (4) est configuré sans embranchements.

5. Système de circulation d'air selon la revendication 1, **caractérisé en ce que** la tubulure (10) est collée ou soudée ou brasée dans le caisson de refroidisseur d'air de suralimentation (12) .

6. Système de circulation d'air selon la revendication 3 ou 4, **caractérisé en ce que** la tubulure (10) pour la conduite de dérivation (11) dans le caisson de refroidisseur d'air de suralimentation (12) et une tubulure (14) pour le tuyau sous pression (4) dans le caisson de refroidisseur d'air de suralimentation (12) sont disposées essentiellement parallèlement l'une à l'autre.

7. Système de circulation d'air selon la revendication 3 ou 4, **caractérisé en ce qu'**une paroi arrière (17) du caisson de refroidisseur d'air de suralimentation (12) est réalisée essentiellement de manière arquée ou bombée dans la région en regard de et entre la tubulure (10) pour la conduite de dérivation (11) et une tubulure (14) pour le tuyau sous pression (4).

8. Système de circulation d'air selon l'une quelconque des revendications précédentes, **caractérisé en ce que** la dérivation (7) est pourvue d'une soupape (9).

9. Procédé de déviation d'air selon l'une quelconque des revendications précédentes 1 à 8.
